# EUROPÄISCHE PATENTANMELDUNG

(11) **EP 1 428 604 A1**
(43) Veröffentlichungstag der Anmeldung: **16.06.2004**
(21) Anmeldenummer: 03027928.5
(22) Anmeldetag: 04.12.2003
(51) Int. Cl.: B23K 1/005, B23K 35/38

(54) **Schutzgasgemisch für das Laser-Löten von Metallwerkstoffen**

(30) Priorität: 11.12.2002 DE 10257803
(71) Anmelder: MESSER GRIESHEIM GmbH, 65933 Frankfurt am Main (DE)
(72) Erfinder: Kaya, Cerkez, 47804 Krefeld (DE)

(57) **Zusammenfassung**

Das erfindungsgemäße Schutzgasgemisch für das Laser-Löten von Metallen, insbesondere von un- und niedriglegierten Baustahlteilen, gekennzeichnet durch einen Volumenanteil von 0,1 - 2,5% Aktivgas in Form von Sauerstoff und/oder Kohlendioxid, 10 - 35 % Helium, Rest Argon ermöglicht ein von der Laserwellenlänge und dem Absorptionsvermögen der zu lötenden Werkstücke unabhängiges Laserlöten mit einer störungsfreien Energieumsetzung und somit gleichmäßige und fehlerfreie Lötnähte.

## Beschreibung

Die Erfindung betrifft ein Schutzgas für das Laser-Löten von Metallwerkstoffen, insbesondere von un- und niedriglegierten Baustählen.

Das Fügen von Metallwerkstoffen durch Laserschweißen oder Löten unter einer Argon-Helium-Schutzgasatmosphäre mit/ohne Aktivgaszusätzen ist allgemein bekannt.

Des Weiteren ist bekannt, dass beim Fügen von Metallwerkstoffen das Löten, wie beispielsweise das Metall-Schutzgas-Löten (MSG-Löten), im Vergleich zum Schweißen, wie beispielsweise das Laserschweißen, wichtige Vorteile, wie beispielsweise eine hohe Prozesssicherheit, eine bessere Nahtqualität, eine sehr gute Verbindungsfestigkeit sowie eine hohe Korrosionsbeständigkeit, aufweist.

Jedoch blieben bisher alle Versuche, die bekannten Vorteile des Laserschweißens auf das MSG-Löten zum Fügen von Metallwerkstoffen, insbesondere von unlegierten und niedriglegierten Baustählen, zu übertragen, erfolglos, da kein für den Einsatz eines CO2-Lasers beim Löten von Metallwerkstoffen geeignetes Schutzgas zur Verfügung stand.

Ein beim CO2-Laser-Löten von Metallwerkstoffen einsetzbares Schutzgas muss - zusätzlich zu seiner eigentlichen Schutzfunktion - bewirken, dass die beim Löten eingesetzten Lotwerkstoffe, wie z.B. Bronze- oder Kupfer- bzw. Kupferlegierungs-Draht, trotz des eine geringe, spezifische Wellenlänge (Lambda = 10,6 µm) aufweisenden C02-Gaslaserstrahls so aufgeschmolzen werden, das die Metallteile dauerhaft zusammengelötet sind.

Der Erfindung liegt daher die Aufgabe zugrunde, ein Schutzgas zum Laser-Löten von Metallen, insbesondere von Bauteilen aus un- und niedriglegierten Stahl, zu schaffen, welches unabhängig von der Laserwellenlänge und dem Absorptionsvermögen der zu lötenden Metallteile einen stabilen Laser-Löt-Prozess mit einer störungsfreien Energie-Umsetzung und somit gleichmäßige und fehlerfreie Lötnähte ermöglicht.

Die erfindungsgemäße Aufgabe wird durch ein Schutzgasgemisch mit den Merkmalen des Anspruchs 1 gelöst.

Vorteilhafte Ausgestaltungen der Erfindung sind in den Unteransprüchen beschrieben.

Das erfindungsgemäße Edelgas-Schutzgasgemisch mit einer Aktivgas-Beimischung von Sauerstoff und/oder Kohlendioxid ermöglicht ein effizientes und qualitätsgerechtes C02-Laser-Löten von Metallwerkstoffen, insbesondere von un- und niedriglegierten Baustählen.

Durch den hohen Argon-Anteil im erfindungsgemäßen Schutzgasgemisch werden die C02-Laserstrahlen in der Weise absorbiert, dass ein die optimale Einkopplung des Laserstrahls in die Werkstückoberfläche bewirkendes Plasma gebildet wird.

Das in dem erfindungsgemäßen, für das Laser-Löten von Metallwerkstoffen vorteilhaft einsetzbaren Schutzgasgemisch mit dem grössten Volumenanteil aller Gaskomponenten enthaltene Argon erzeugt in Verbindung mit dem bis zu 35 Vol.-% betragenen Helium-Anteil und der bis zu 2,5 Vol.-% betragenen Aktivgas-Beimischung aus Sauerstoff und/oder Kohlendioxid, ein gezielt, stabiles, energieintensives Plasma zum schlagartigen Erschmelzen der beim Löten eingesetzten Lotwerkstoffe, wie beispielsweise Bronze-, Kupfer- oder Kupferlegierungs-Drähte.

Des Weiteren bewirken die im erfindungsgemäßen Schutzgasgemisch zum Löten von Metallwerkstoffen mittels eines C02-Laserstrahlen enthaltenden Helium- und Aktivgas-Anteile eine optimale Wärmeleitung und Benetzung der Werkstückoberfläche.

Für das Laser-Löten von Metallen ist ein Schutzgasgemisch mit einem Volumenanteil von 69,5 Argon (Ar), 30 % Helium (He) und 0,5 % Kohlendioxid (C02) besonders vorteilhaft einsetzbar.

Das erfindungsgemäße Schutzgasgemisch ist besonders für das Laser-Löten von un- und niedriglegierten Baustählen und von beschichteten oder unbeschichteten Stahlblechen geeignet.

## Patentansprüche

1. Schutzgasgemisch für das Laser-Löten von Metallwerkstoffen, insbesondere von un- und niedriglegierten Baustählen, **gekennzeichnet durch** einen Volumenanteil von 0,1 - 2,5% Aktivgas und 10 - 35 % Helium, Rest Argon.

2. Schutzgasgemisch nach Anspruch 1, **gekennzeichnet durch** einen Volumenanteil von 69,5 % Argon, 30% Helium und 0,5% Aktivgas.

3. Schutzgas nach Anspruch 1, **dadurch gekennzeichnet, daß** das Aktivgas aus Sauerstoff besteht.

4. Schutzgasgemisch nach Anspruch 1, **dadurch gekennzeichnet, daß** das Aktivgas aus Kohlendioxid besteht.

5. Schutzgasgemisch nach Anspruch 1, **dadurch gekennzeichnet, daß** das Aktivgas aus Sauerstoff und Kohlendioxid besteht.
